Europäisches Patentamt

European Patent Office

Office européen des brevets

(11) Numéro de publication: **0 196 968**
**B1**

# (12) FASCICULE DE BREVET EUROPEEN

(45) Date de publication du fascicule du brevet:
28.10.87

(21) Numéro de dépôt: **86400638.2**

(22) Date de dépôt: **25.03.86**

(51) Int. Cl.⁴: **B 60 J 5/10,** B 60 J 1/18

(54) Hayon pour véhicule automobile.

(30) Priorité: **29.03.85 FR 8504832**

(43) Date de publication de la demande:
**08.10.86 Bulletin 86/41**

(45) Mention de la délivrance du brevet:
**28.10.87 Bulletin 87/44**

(84) Etats contractants désignés:
**DE GB IT**

(56) Documents cités:
**DE - A - 2 615 522**
**US - A - 3 612 601**
**US - A - 3 713 472**
**US - A - 4 413 854**

(73) Titulaire: **AUTOMOBILES PEUGEOT, 75, avenue de la Grande Armée, F-75116 Paris (FR)**
Titulaire: **AUTOMOBILES CITROEN, 62 Boulevard Victor-Hugo, F-92200 Neuilly-sur-Seine (FR)**

(72) Inventeur: **Taunay, Claude, 5 rue Paulhan, F-78140 Velizy (FR)**

(74) Mandataire: **Moncheny, Michel et al, c/o Cabinet Lavoix 2 Place d'Estienne d'Orves, F-75441 Paris Cedex 09 (FR)**

## Description

La présente invention est relative aux hayons vitrés équipant certains véhicules automobiles et articulés à leur partie supérieure sur la structure du véhicule. Ces hayons sont généralement disposés à l'arrière du véhicule et donnent accès à un coffre à bagages recouvert d'une tablette mobile ou amovible située sous la vitre du hayon, qui constitue la lunette arrière du véhicule.

Pour faciliter l'accès au coffre et pour pouvoir y introduire des objets volumineux, le hayon est de préférence aussi vaste que possible, il en est de même pour la vitre afin de procurer une bonne visibilité aux occupants du véhicule. De ce fait, le hayon vitré est non seulement lourd, ce qui rend pénible sa manipulation, mais en outre son ouverture provoque un important échange thermique entre l'habitacle du véhicule et l'extérieur, ce qui est fâcheux par temps très froid et même par temps très chaud si l'habitacle est climatisé. Ces inconvénients se produisent à chaque ouverture du hayon, souvent même pour n'accéder au coffre que pour y introduire ou en retirer de petits objets.

L'invention a pour but de remédier à ces inconvénients en réalisant un hayon vitré dont la manipulation courante ne nécessite qu'un effort peu important et ne provoque pas d'échange thermique notable entre l'habitacle et l'extérieur.

L'invention a donc pour objet un hayon de véhicule articulé le long de son bord supérieur sur la structure du véhicule et comportant une vitre dans sa partie supérieure, caractérisé en ce qu'il comprend une première partie constituée essentiellement de la vitre et agencée pour prendre appui sur la structure au moins le long de ses bords latéraux et une seconde partie adaptée pour entourer la première partie et reposer au moins sur le bord inférieur de celle-ci, les deux parties étant articulées séparément sur la structure autour d'un même axe.

Selon d'autres dispositions avantageuses de l'invention:

— les deux parties du hayon sont articulées chacune au moyen de deux charnières latérales opposées, les deux charnières situées du même côté étant articulées sur un même axe porté par un charnon fixé sur un longeron ou sur une traverse bordant le pavillon du véhicule;

— en position de fermeture du hayon, la première partie repose le long de son bord supérieur et de ses bords latéraux, sur des joints d'étanchéité bordant des gouttières respectivement supérieure et latérales de la structure, et la seconde partie repose au moins sur un joint d'étanchéité bordant une gouttière agencée le long du bord inférieur de la vitre;

— les première et deuxième parties sont équipées d'éléments de serrure propres à les maintenir en contact l'une contre l'autre;

— la seconde partie comporte deux montants latéraux engagés, en position de fermeture, dans les deux gouttières latérales;

— sur chacune des deux gouttières latérales est articulé un vérin télescopique par ailleurs articulé sur la seconde partie et prenant place dans la gouttière en position de fermeture du hayon.

L'invention sera mieux comprise à l'aide de la description qui va suivre, donnée uniquement à titre d'exemple et faite en se référant aux dessins annexés, sur lesquels:

— la fig. 1 est une vue simplifiée en perspective de trois quarts arrière d'une partie d'un véhicule équipé d'un hayon selon l'invention, celui-ci étant ouvert partiellement;

— la fig. 2 est une vue simplifiée en perspective de trois quarts arrière à plus grande échelle, d'un premier mode de réalisation de deux charnières d'un hayon selon l'invention, situées du même côté;

— la fig. 3 est une vue en coupe longitudinale, suivant la ligne III-III de la fig. 1, d'un second mode de réalisation de deux charnières d'un hayon selon l'invention, et

— les fig. 4 et 5 sont des vues en coupe, respectivement suivant les lignes IV-IV et V-V de la fig. 1, de deux parties du hayon, celui-ci étant en position de fermeture.

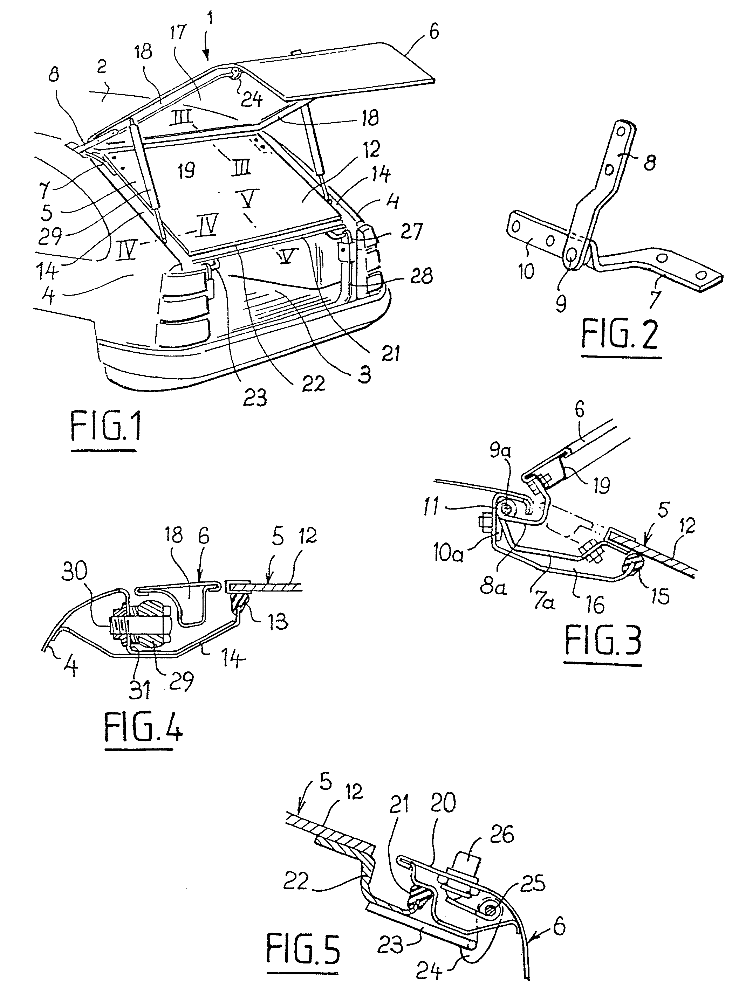

On voit sur la fig. 1, la partie arrière d'un véhicule comportant un hayon vitré 1 articulé le long de son bord supérieur sur la structure du véhicule, le long de l'extrémité arrière du pavillon 2 du véhicule. Ce hayon est destiné à obturer une large ouverture ménagée dans la structure et donnant accès à un coffre à bagages 3 aménagé entre deux panneaux latéraux opposés 4.

Le hayon 1 comprend deux parties 5 et 6 articulées séparément autour d'un même axe horizontal voisin du bord arrière du pavillon, grâce à des charnières 7, 8 ou 7a, 8a, selon deux modes de réalisation représentés respectivement aux fig. 2 et 3. Chacune des parties 5 et 6 est articulée au moyen de deux charnières latérales opposées de chaque côté du hayon. Une des charnières 7 ou 7a de la première partie 5 et une des charnières 8 ou 8a de la deuxième partie 6, sont articulées autour d'un même axe 9 ou 9a porté par un charnon 10 (fig. 2) fixé, de façon non visible, à un longeron bordant le pavillon 2, ou par un charnon 10a (fig. 3) fixé à une traverse 11 située à l'arrière du pavillon. Il en est de même pour les charnières situées de l'autre côté du hayon.

La première partie 5 est constituée principalement d'une vitre 12 inclinée au-dessus du coffre et assez large pour reposer, par l'intermédiaire de joints d'étanchéité 13 (fig. 4), sur deux gouttières latérales opposées 14 solidaires de la structure au voisinage du bord supérieur des panneaux 4. Quand cette première partie est abaissée, elle repose également près de son bord supérieur, sur un joint 15 (fig. 3) bordant une gouttière supérieure 16 solidaire de la traverse 11.

La deuxième partie 6 s'étend, quand elle est abaissée, sur toute la surface de ladite ouverture de la structure et comporte une large échancrure supérieure 17 adaptée pour entourer la vitre 12 et délimitée par deux montants latéraux 18 et par deux traverses supérieure 19 et inférieure 20. En position de fermeture du hayon, les montants 18 et la traverse 19 s'engagent dans les gouttières laté-

rales 14 et dans la gouttière supérieure 16, tandis que la traverse 20 (fig. 5) repose sur un joint d'étanchéité 21 bordant une gouttière 22 fixée à la vitre 12 et s'étendant sur toute la longueur de son bord inférieur.

Une serrure propre à maintenir en contact, le long du joint 21, les parties 5 et 6, comprend deux gâches latérales opposées 23 solidaires de la gouttière 22 et propres à coopérer chacune avec l'un de deux pênes 24 fixés aux deux extrémités d'une tige 25 logée dans la traverse 20 et manœuvrable par un bouton poussoir 26 ou, en variante, par un moyen usuel de commande à distance, notamment électrique.

Les gâches 23 sont également propres à coopérer chacune avec un pêne 27 (fig. 1) articulé sur un axe solidaire de la structure, constituant une serrure destinée à maintenir abaissée la partie 5. Cette serrure étant actionnable à distance par un câble 28 ou électriquement. En variante, une serrure est classiquement agencée au milieu de l'extrémité inférieure de la partie 6 et de ladite ouverture de la structure de manière à pouvoir maintenir cette partie 6 en position abaissée.

Dans chaque gouttière latérale 14 prend place, quand le hayon est abaissé, un vérin télescopique 29 articulé d'une part sur l'un des montants 18, et d'autre part sur un axe 30 fixé sur un flanc 31 de la gouttière associée (fig. 4). Ce vérin est un équilibreur pneumatique classique, exerçant une poussée vers le haut sur la partie 6.

A la fig. 1, la partie 6 du hayon est maintenue levée par les équilibreurs 29 et la vitre est maintenue abaissée par la serrure 23, 27, 28 (elle serait maintenue abaissée par son poids seul dans le cas de la variante comprenant une serrure médiane inférieure). L'accès au coffre 3 est suffisant pour des objets relativement petits, et l'isolement thermique entre l'habitacle et l'extérieur est assuré par la vitre et par une tablette habituellement disposée sur le coffre et sous la vitre.

En abaissant la partie 6, les pênes 24 s'accrochent aux gâches 23 et l'ensemble du hayon est ainsi maintenu en position de fermeture. Pour ne rouvrir que la partie 6, on agit sur la serrure 23, 24, 26 en actionnant le bouton 26 (ou, en variante, une commande à distance).

Pour ouvrir totalement le hayon, notamment pour introduire dans le coffre un objet très volumineux, on actionne la serrure 23, 27, 28 (ou, en variante, la serrure inférieure médiane susmentionnée). Les pênes 24 restent accrochés aux gâches 23, la vitre se soulève en même temps que la partie 6, avec l'aide des deux équilibreurs 29.

## Revendications

1. Hayon pour véhicule automobile, articulé le long de son bord supérieur sur la structure du véhicule et comportant une vitre dans sa section supérieure, caractérisé en ce qu'il comprend une première partie (5) constituée essentiellement de la vitre (12) et adaptée pour prendre appui sur la structure du véhicule au moins le long de ses bords latéraux, et une deuxième partie (6) adaptée pour entourer la première partie et reposer au moins sur le bord inférieur de celle-ci, ces première et deuxième parties étant articulées séparément sur la structure autour d'un même axe (9; 9a).

2. Hayon suivant la revendication 1, caractérisé en ce que les deux parties (5, 6) du hayon sont articulées chacune au moyen de deux charnières latérales (7, 8; 7a, 8a), les deux charnières situées du même côté étant articulées autour du même axe (9; 9a) porté sur un charnon (10; 10a) fixé à un élément de structure du véhicule.

3. Hayon suivant la revendication 2, caractérisé en ce que chaque charnon (10) est fixé, de façon non visible, à un longeron bordant le pavillon.

4. Hayon suivant la revendication 2, caractérisé en ce que chaque charnon (10a) est fixé à une traverse (11) située à l'arrière du pavillon.

5. Hayon suivant l'une quelconque des revendications 1 à 4, caractérisé en ce qu'en position de fermeture du hayon, la première partie (5) repose le long de son bord supérieur et de ses bords latéraux, sur des joints d'étanchéité (15, 13) bordant respectivement des gouttières supérieure (16) et latérales (14) de la structure, et la deuxième partie (6) repose au moins sur un joint d'étanchéité (21) bordant une gouttière (22) agencée le long du bord inférieur de la première partie.

6. Hayon selon l'une quelconque des revendications 1 à 5, caractérisé en ce que les première et deuxième parties sont munies d'éléments de serrure (23, 24, 25, 26) adaptés pour verrouiller ensemble ou libérer l'une de l'autre ces deux parties (5, 6).

7. Hayon selon l'une quelconque des revendications 5 et 6, caractérisé en ce que la seconde partie (6) est munie de montants latéraux (18) dans sa section supérieure, adaptés pour s'engager en position de fermeture, dans les deux gouttières latérales (14).

8. Hayon selon l'une quelconque des revendications 5 à 7, caractérisé en ce qu'il comprend deux vérins télescopiques (29) articulés chacun sur une des gouttières latérales (14) d'une part et sur le côté correspondant de la deuxième partie d'autre part, et adaptés pour se loger dans les gouttières (14) en position de fermeture.

## Claims

1. Hatch door for an automobile vehicle, pivoted along its upper edge to the structure of the vehicle and comprising a window glass in its upper section, characterised in that it comprises a first part (5) essentially constituted by the glass (12) and adapted to bear against the structure of the vehicle at least along its lateral edges, and a second part (6) adapted to surround the first part and bear at least on the lower edge of the latter, these first and second parts being separately pivoted to the structure about the same pivot element (9; 9a).

2. Hatch door according to claim 1, characterised in that the two parts (5, 6) of the hatch door are each pivoted by means of two lateral hinges (7, 8; 7a, 8a), the two hinges located on the same side being pivotable about the same pivot element (9, 9a) carried by a hinge knuckle (10; 10a) fixed to a structure element of the vehicle.

3. Hatch door according to claim 2, characterised in that each knuckle (10) is fixed, in an invisible manner, to a side member extending alongside the roof.

4. Hatch door according to claim 2, characterised in that each knuckle (10a) is fixed to a cross-member (11) located at the rear of the roof.

5. Hatch door according to any one of the claims 1 to 4, characterised in that in the closed position of the hatch door, the first part (5) bears along its upper edge and along its lateral edges on sealing elements (15, 13) respectively extending alongside an upper gutter (16) and lateral gutters (14) of the structure, and the second part (6) bears at least against a sealing element (21) extending alongside a gutter (22) arranged along the lower edge of the first part.

6. Hatch door according to any one of the claims 1 to 5, characterised in that the first and second parts are provided with latch elements (23, 24, 25, 26) adapted to lock together or release one of these parts (5, 6) relative to the other thereof.

7. Hatch door according to either one of the claims 5 and 6, characterised in that the second part (6) is provided with lateral posts (18) in its upper section, adapted to engage, in the closed position, in the two lateral gutters (14).

8. Hatch door according to any one of the claims 5 to 7, characterised in that it comprises two telescopic jacks (29) each pivoted to one of the lateral gutters (14) on one hand, and to the corresponding side of the second part, on the other hand, and adapted to be housed in the gutters (14) in the closed position.

## Patentansprüche

1. Heckklappe für Kraftfahrzeuge, welche längs ihres oberen Randes an dem Fahrzeugaufbau angelenkt ist und in ihrem oberen Abschnitt eine Fensterscheibe aufweist, dadurch gekennzeichnet, dass sie ein erstes Teil (5), welches im wesentlichen durch die Scheibe (12) gebildet und so eingerichtet ist, dass es am Fahrzeugaufbau wenigstens längs seiner Seitenkanten zur Anlage kommt, und ein zweites Teil (6), welches so eingerichtet ist, dass es das erste Teil einfasst und wenigstens auf dem unteren Rand desselben aufruht, aufweist, wobei das erste und das zweite Teil getrennt am Aufbau um ein und denselben Bolzen (9, 9a) schwenkbar sind.

2. Heckklappe nach Anspruch 1, gekennzeichnet, dass die beiden Teile (5, 6) der Heckklappe jeweils mittels zweier seitlicher Scharniere (7, 8; 7a, 8a) angelenkt sind, wobei die beiden auf der gleichen Seite angeordneten Scharniere um den gleichen Bolzen (9, 9a) schwenkbar sind, der von einem an einem Teil des Fahrzeugaufbaus befestigten Scharnierröhrchen (10, 10a) getragen wird.

3. Heckklappe nach Anspruch 2, dadurch gekennzeichnett, dass jedes Scharnierröhrchen (10) nicht sichtbar an einem das Dach begrenzenden Längsträger befestigt ist.

4. Heckklappe nach Anspruch 2, dadurch gekennzeichnet, dass jedes Scharnierröhrchen (10a) an einem hinten am Dach liegenden Querträger (11) befestigt ist.

5. Heckklappe nach irgendeinem der Ansprüche 1 bis 4, dadurch gekennzeichnet, dass in Verschlussstellung der Heckklappe das erste Teil (5) längs seines oberen Randes und seiner seitlichen Ränder auf Dichtungen (15, 13) aufruht, welche jeweils obere (16) und seitliche (14) Ablaufrinnen des Aufbaus begrenzen, und das zweite Teil (6) wenigstens auf einer Dichtung (21) ruht, welche eine längs des unteren Randes des ersten Teils angeordnete Ablaufrinne (22) begrenzt.

6. Heckklappe nach irgendeinem der Ansprüche 1 bis 5, dadurch gekennzeichnet, dass das erste und das zweite Teil mit Verschlussvorrichtungen (23, 24, 25, 26) versehen sind, welche für ein wechselseitiges Verriegeln oder Lösen der beiden Teile (5, 6) eingereicht sind.

7. Heckklappe nach irgendeinem der Ansprüche 5 oder 6, dadurch gekennzeichnet, dass das zweite Teile (6) in seinem oberen Abschnitt mit seitlichen Holmen (18) versehen ist, die so eingerichtet sind, dass sie sich in Verschlussstellung in die beiden seitlichen Ablaufrinnen (14) einfügen.

8. Heckklappe nach irgendeinem der Ansprüche 5 bis 7, dadurch gekennzeichnet, dass sie zwei teleskopische Hebevorrichtungen (29) umfasst, welche jeweils einerseits an einer der seitlichen Ablaufrinnen (14) und andererseits an der entsprechenden Seite des zweiten Teils angelenkt und so eingerichtet sind, dass sie sich in der Verschlussstellung in die Ablaufrinnen (14) legen.

FIG.1

FIG.2

FIG.3

FIG.4

FIG.5